# EUROPÄISCHE PATENTSCHRIFT

(11) **EP 2 086 689 B1**
(45) Veröffentlichungstag und Bekanntmachung des Hinweises auf die Patenterteilung: **23.11.2011**
(21) Anmeldenummer: 07818414.0
(22) Anmeldetag: 25.09.2007
(51) Int. Cl.: B05B 1/30, F16K 31/08

(54) **VENTILEINHEIT ZUM UNTERBRECHEN ODER FREIGEBEN EINES DURCHFLUSSES EINES MEDIUMS LÄNGS EINES HOHLKANALS SOWIE DEREN VERWENDUNG IN EINEM DOSIERSYSTEM ZUM DOSIERTEN AUSBRINGEN DES MEDIUMS SOWIE VERFAHREN ZUM DOSIERTEN AUSBRINGEN EINES MEDIUMS**
VALVE UNIT FOR INTERRUPTING OR RELEASING A FLOW OF A MEDIUM ALONG A HOLLOW DUCT, USE THEREOF IN A DOSING SYSTEM FOR THE METERED DISCHARGE OF SAID MEDIUM, AND METHOD FOR THE METERED DISCHARGE OF A MEDIUM
UNITÉ SOUPAPE DESTINÉE À INTERROMPRE OU À LIBÉRER L'ÉCOULEMENT D'UN FLUIDE LE LONG D'UN CONDUIT CREUX, SON UTILISATION DANS UN SYSTÈME DE DOSAGE PERMETTANT UN DÉBIT DOSÉ DUDIT FLUIDE, ET PROCÉDÉ DE MISE EN OEUVRE ASSOCIÉ

(30) Priorität: 26.09.2006 DE 102006045407
(43) Veröffentlichungstag der Anmeldung: 12.08.2009
(73) Patentinhaber: Fraunhofer-Gesellschaft zur Förderung der angewandten Forschung e.V., 80686 München (DE)
(72) Erfinder: OTHMAN, Nabih, 70563 Stuttgart (DE); SCHLENKER, Dirk, 70563 Stuttgart (DE)
(74) Vertreter: Rösler, Uwe
(86) Internationale Anmeldenummer: PCT/EP2007/008330
(87) Internationale Veröffentlichungsnummer: WO 2008/037430

(56) Entgegenhaltungen:
- EP-A- 0 213 516
- US-A- 3 026 903
- US-A- 5 320 136

## Beschreibung

### Technisches Gebiet

Die Erfindung bezieht sich auf eine Ventileinheit zum Unterbrechen oder Freigeben eines Durchflusses eines Mediums längs eines Hohlkanals, das Druckbeaufschlagt längs des Hohlkanals strömt. Ferner betrifft die Erfindung den Einsatz der Ventileinheit in einem Dosiersystem zum dosierten Ausbringen des Mediums aus einer Kartuschen-Nadelanordnung, deren Kartusche mit der Nadelanordnung über wenigstens einen Hohlkanal in Verbindung steht und ein offen ausgebildetes Kartuschenende aufweist, auf das ein Druckmittel lastet, das durch Druckbeaufschlagung das innerhalb der Kartusche vorgesehene Medium in Richtung der Nadelanordnung zum Austrag zu treiben vermag.

Eine gattungsgemäße Ventileinheit wird in EP 0213 516 gezeigt.

### Stand der Technik

Gattungsgemäße Vorrichtungen zum dosierten Ausbringen von viskosen Medien, vorzugsweise nieder-, mittel- und hochviskosen Flüssigkeiten, wie beispielsweise Öle, Fette, Klebstoffe und Lötpasten, um nur einige zu nennen, sind vielfach auch unter der Bezeichnung "Dispenser" bekannt und werden in unterschiedlichsten Technikgebieten, wie Feinwerk-, Nano-, Mikrotechnik, insbesondere Bereiche der Mikroelektronik, Mikrooptik, Mikromechanik als auch in der Bio- und Medizintechnik eingesetzt. Typische Anwendungsfälle derartiger Dispenser-Systeme für mittel- und hochviskose Medien betreffen beispielsweise das exakte Ausbringen und Positionieren kleinster Klebstofftropfen zum Fügen in der Elektronikfertigung, die Schmierung von Lagern mit Ölen und Fetten im Maschinenbau, vorzugsweise in Bereichen der Mikromechanik, sowie das kontinuierliche oder zyklische Fördern von Reagenzien in der chemischen Industrie oder zu Zwecken der Analysetechnik oder auch zur Verabreichung feinst dosierter flüssiger Arzneimittel zur Patientenversorgung, insbesondere in der Intensivmedizin.

Aus einem Beitrag von F. Kohler "Punkt für Punkt - Die Techniken für das Dispensen von Lotpasten", erschienen in "productronic" (1991), No. 4, Seiten 18 bis 20, ist eine Übersicht derzeit auf dem Markt verfügbarer Dispenser-Systeme für mittel- und hochviskoser Medien zu entnehmen, die insbesondere zur Erzeugung und Platzierung von Tropfen, so genannter Dots, im Rahmen des zyklischen Dispensens von Medien geeignet sind. Hierbei unterscheidet man grundsätzlich folgende Systeme:

### a) Zeit/Druck-Kartuschen-Dosiersystem

Dieses System kann als Basissystem aufgefasst werden, das in gleicher oder abgewandelter Form auch in den nachstehend kurz erläuterten Dispenser-Systemen zur dosierten Bereitstellung viskoser Medien Verwendung findet. Das als Basissystem bezeichnete Dispenser-System besteht aus einer Kartusche mit einer Dispensernadel am unteren Ende sowie einem Druckverschluss am oberen Ende der Kartusche. Über gezielten Druckaufbau im oberen Ende der Kartusche wird eine Art Kolbeneinheit gegen das übrige Kartuschenvolumen gepresst, in dem sich das zu dispensende, viskose Medium zum Austrag durch die Dosiernadel befindet. Kartuschen/Dispensernadel-Einheiten sind als Einwegartikel verfügbar und lösbar fest gegen einen entsprechenden Druckanschluss zu verfügen.

### b) Rotations-Schrauben-Dosiersysteme

Sogenannte Rotations-Schrauben-Dosiersysteme sehen eine zumeist über einen Getriebemotor antreibbare Rotationsschraube vor, die als Förderschraube für das auszutragende viskose Medium dient und axial zur Dispensernadel angeordnet ist. Längs zur Förderschraube wird das zu dispensende, viskose Medium unter niedrigem Druck zugeführt, beispielsweise unter Verwendung des vorstehend bezeichneten Zeit/Druck-Kartuschen-Dosiersystems. Je nach Rotationsgeschwindigkeit der als Rotationsschraube ausgebildeten Förderschraube kann der durch die Nadeleinheit ausgetragene Volumenstrom an viskosem Medium feinstdosiert eingestellt werden.

### c) Peristaltik Dispenser

Wieder dient eine mit viskosem Medium gefüllte Kartusche zum gezielten Austrag des Mediums unter geringem Druck in eine Art Plastiktube, die zwei schließbare Tubenenden vorsieht. Wird ein Verschluss an einem Ende geöffnet, kann das Medium aus der Kartusche in die Tube hineinfließen. Der erste Verschluss wird daraufhin geschlossen und der zweite Verschluss entsprechend geöffnet, wobei ein zwischen beiden Verschlüssen vorgesehener Stößel auf die Tube drückt, um das viskose Medium durch die zweite Öffnung in eine entsprechende Dispensernadel zu fördern.

### d) Kolben-Positiv-Displacement-Dosiersysteme

Sogenannte Kolben-Positiv-Displacement-Dosiersysteme weisen in aller Regel eine mit viskosem Medium gefüllte Kartusche auf, die das Medium unter geringem Druck durch einen Kanal zu einer Pumpkammer leitet, längs der ein Kolben bewegbar angeordnet ist, der bei Bewegung nach oben einen Unterdruck innerhalb der Pumpkammer erzeugt, wodurch das viskose Material aus der Kartusche in die Pumpkammer fließt. Wenn sich der Kolben nach unten bewegt, wird die Materialzuführung längs der Kartusche unterbrochen und der Kolben drückt die gewünschte Menge des Mediums durch eine entsprechende Dispensernadel, die axialwärts zur Pumpkammer angeordnet ist, aus.

Vorstehend kurz umrissene Dispenser-Systeme vermögen zwar grundsätzlich viskose Medien volumendosiert an lokal vorgebbare Bereiche auszutragen, doch sind der Genauigkeit im Hinblick auf kleinste Volumenabgaben sowie der hochpräzisen Reproduzierbarkeit der abgegebenen Volumenmenge bezogen über die gesamte Entleerung einer mit viskosem Medium angefüllten Kartusche Grenzen gesetzt. So bieten die beschriebenen Dispenser-Systeme und Verwendung von Kartuschen eine schlechte Volumen-Wiederholungsgenauigkeit, d.h. die Volumina einzelner nacheinander ausgebrachter Dots variieren zunehmen, zumal sich zum einen die Viskosität des Materials aufgrund von Schwankungen der Feuchtigkeit und Temperatur ändert und infolgedessen eine entsprechende Veränderung des Druckwertes notwendig wird, um ein gleiches Volumen zu dispensen. Zum anderen tritt eine Änderung des dispensten Volumens auf, sofern der gleiche Druck an der vollen wie an der fast leeren Kartusche angelegt würde. So ändert sich beispielsweise der Volumenaustrag aus einer Kartusche bei konstantem Förderdruck von bis zu 19% bei Verwendung einer 10 cm³ -Kartusche.

Die vorstehende Problematik lässt sich technisch bisher am besten mit den vorstehend unter Punkt d) bezeichneten Kolben-Positiv-Displacement-System beherrschen, jedoch sind derartige Systeme konstruktionsbedingt am aufwendigsten und somit am kostspieligsten. Auch stoßen die vorstehend bezeichneten Dosiersysteme an Funktionsgrenzen, im Bestreben, derartige Systeme zu miniaturisieren.

Zudem tendieren bekannte Dispenser-Systeme beim Abheben der Dosiernadel, jeweils nach einem Materialaustrag, zum Nachtropfen, da der längs der Dosiernadel für den Materialaustrag erforderliche Überdruck nicht oder nicht rechtzeitig genug abgebaut wird.

Auch sind Zeit-Druck-Kartuschen-Dosiersysteme, wie vorstehend erwähnt, bekannt, bei denen zwischen der das zu dispensende Medium bevorratenden Kartusche und der Nadelanordnung ein schaltbares Ventil vorgesehen ist, das auf elektromagnetischer oder piezoelektrischer Basis arbeitet und zur Ansteuerung elektrischen Strom bedarf, der letztlich wieder zu einer störenden Erwärmung des Systems führt und einen exakten Medienaustrag, insbesondere bei der Verabreichung kleinster Stoffmengen im Nanoliterbereich, stört. Zudem weisen derartige schaltbare Durchflussventilsysteme zumeist große Baugrößen auf, wodurch eine Integration und insbesondere Anwendung in Mikrodosiersystemen nur bedingt möglich ist. Des Weiteren führt der Schließvorgang bei an sich bekannten Ventilen konstruktionsbedingt zu einem kurzzeitigen Druckaufbau innerhalb der Nadel, der zu einem Nachtropfen führt, das es zu vermeiden gilt. Zudem eignen sich bisher bekannte Durchflußventilsysteme entweder zur Durchflußunterbrechung von gasförmigen Medien oder für flüssige Medien. Ein Ventilsystem, das sowohl Medien mit flüssigem oder gasförmigem Aggregatszustand zu steuern vermag, ist derzeit nicht bekannt. Schließlich sind die mit den bekannten Ventilen verbundenen Herstellkosten beträchtlich.

Die in der DE 2839774 A1 beschriebene Vorrichtung zur Einstellung des Durchflussquerschnittes eines Ventils basiert darauf, dass ein über ein Axialgewinde gehaltener Dauermagnet durch Verdrehen eines den Dauermagneten radial umgebenden ringförmigen Magneten gleichsam in Rotation versetzt wird, wodurch der innen liegende Dauermagnet durch die Gewindeführung axial positionierbar ist. Der innen liegende Dauermagnet ist mit einem Kegelstift verbunden, der eine Ventilöffnung in Abhängigkeit der axialen Stellung des Dauermagneten zu verschließen vermag.

Die DE 38 02 658 A1 beschreibt ein Magnetventil, dessen Funktionsweise durch die axiale Position eines axial zum Hohlkanal beweglich gelagerten Permanentmagneten bestimmt wird. Aufgrund der magnetischen Verhältnisse der in dem Magnetventil vorhandenen Permanentmagnete bleibt die Ventilanordnung in einer von äußeren Krafteinwirkungen unbelasteten Grundposition offen, zumal die axial bewegliche Magneteinheit eine axial wirkende abstoßende Kraft durch die gleichfalls im Hohlkanal vorgesehene Magneteinheit erfährt. Wirkt hingegen ein entsprechend axial wirkender Strömungsdruck bzw. Volumenstrom V auf den Ventilsitz 3 ein, so wird dieser axial verschoben und gegen eine Ventilnadel verfahren, bis bei einem maximalen Volumenstrom die Ventileinheit in einen geschlossenen Zustand übergeht. Durch die Formgebung des Ventilkörpers und der angestrebten großen Längsbeweglichkeit des Ventilsitzes in Axialrichtung lässt sich das bekannte Magnetventil in besonders vorteilhafter Weise als Magnetregelventil einsetzen. Zu diesem Zwecke sind längs der Hohlraumwand optische Sensoren vorgesehen, um die axiale Lage des Ventilsitzes zu erfassen.

### Darstellung der Erfindung

Der Erfindung liegt die Aufgabe zugrunde, eine Ventileinheit anzugeben, mit dem es möglich ist Medien sowohl mit flüssigem oder gasförmigen Aggregatszustand zu schalten und dies mit hoher Präzision und definiertem Öffnungs- und Schließverhalten. Die Ventileinheit soll bevorzugt geeignet sein für den Einsatz in einem Dosiersystem zum dosierten Ausbringen eines Mediums aus einer Kartuschen-Nadelanordnung. Hierbei gilt es folgende Forderungen zu erfüllen:
Die Dosierung soll mit hoher Dynamik erfolgen, d.h. bei Vorliegen eines Ventilöffnungssignals bzw. Ventilschließsignales soll ein schnellstmöglicher Medienauftrag bzw. Beenden des Auftrags erfolgen. Der Medienaustrag soll möglichst flexibel hinsichtlich eines zyklischen sowie kontinuierlichen Austrages möglich sein, d.h. ein Wechsel zwischen punkt- und linienförmigen Medienaustrag sollte während eines laufenden Dispensvorganges möglich sein. Nach dem Medienaustrag gilt es ferner dafür zu sorgen, dass ein Nachtropfen des noch in der Nadel befindlichen Mediums vermieden werden soll. Der konstruktive Aufbau der Ventileinheit soll einfach und kostengünstig in der Herstellung sein, ferner sollte ein einfaches Reinigen der Ventileinheit möglich sein. Die Ventileinheit sollte modular in unterschiedliche Systeme mit einem möglichst hohen Integrationsgrad implementierbar sein.

Die Lösung der der Erfindung zugrunde liegenden Aufgabe ist in Anspruch 1 angegeben. Eine lösungsgemäße Verwendung des Gegenstandes des Anspruches 1 ist im Anspruch 11 angegeben. Im Anspruch 16 ist ein erfindungsgemäßes Verfahren zum dosierten Ausbringen eines viskosen Mediums. Die den Erfindungsgedanken vorteilhaft weiterbildenden Merkmale sind Gegenstand der Unteransprüche sowie der Erfindung, insbesondere unter Bezugnahme auf die Beschreibung eines Ausführungsbeispiels zu entnehmen.

Die lösungsgemäße Ventileinheit zum Unterbrechen oder Freigeben eines Durchflusses eines Mediums längs eines Hohlkanals, das Druckbeaufschlagt längs des Hohlkanals strömt, zeichnet sich dadurch aus dass wenigstens in einem Abschnitt längs des Hohlkanals wenigstens eine längs zur Durchströmungsrichtung des Mediums durch den Hohlkanal axial beweglich gelagerte erste Magneteinheit, zur Erzeugung eines ersten Magnetfeldes vorgesehen ist. Ferner ist eine zweite Magneteinheit vorgesehen, deren zweites Magnetfeld mit dem ersten Magnetfeld derart in Wechselwirkung tritt, so dass zwischen der ersten und der zweiten Magneteinheit eine die Magneteinheiten axial gegenseitig anziehende Magnetkraft wirkt. Längs des Hohlkanals ist darüber hinaus ein mechanischer Anschlag vorgesehen, gegen den die erste Magneteinheit mit einer durch die Magnetkraft erzeugbaren Haltekraft treibbar ist und dabei eine axiale Position einnimmt, ausschließlich in der die erste Magneteinheit den Hohlkanal fluiddicht abdichtet, während das Medium Druckbeaufschlagt axial entgegen der Wirkrichtung der Haltekraft auf die erste Magneteinheit lastet. Um schließlich die Ventileinheit zu betätigen, d.h. die Ventileinheit zu Öffnen oder zu Schließen bedarf es einer Einheit, mit der eine auf die erste Magneteinheit entgegen der Haltekraft einwirkende, variabel vorgebbare Kraft erzeugbar ist. Diese Einheit kann in Form einer die Druckbeaufschlagung des Mediums variierenden Einheit ausgebildet sein. Wird ein durch das Medium wirkender Strömungsdruck eingestellt, der ein wenig über der magnetischen Haltekraft liegt, so wird die axial beweglich angeordnete erste Magneteinheit in eine die Ventileinheit geöffnete Position getrieben, sinkt hingegen der Strömungsdruck des Mediums unter die magnetische Haltekraft ab, so bewegt sich die erste Magneteinheit spontan in die geschlossene Position der Ventileinheit. Somit bedarf es keines zusätzlichen Energieaufwandes die Ventileinheit zu betätigen, ausser jenen dem durch die Ventileinheit selbst hindurchströmenden Medium eine geeignet ausgewählte, auf die magnetische Haltekraft der Ventileinheit abgestimmte Strömungsdruckvarianz einzuprägen.

Alternativ kann zum Öffnen und zum Schließen der Ventileinheit eine Magneteinheit, in Form einer Permanent- oder Elektromagneteinheit, vorgesehen sein, die getrennt zum Hohlkanal angeordnet ist und ein externes Magnetfeld erzeugt, das in Wechselwirkung mit der ersten Magneteinheit bringbar ist und diese entgegen der Haltekraft mit hilft kontrolliert auszulenken. Wird beispielsweise die externe Magneteinheit in Richtung der Ventileinheit angenähert, so nimmt das wirksame externe Magnetfeld im Bereich der ersten Magneteinheit zu, wodurch die zwischen der ersten und zweiten Magneteinheit vorherrschende magnetische Haltekraft durch die externe Magnetkraft reduziert wird. Der unverändert auf die bewegliche erste Magneteinheit lastende Druck vermittels des fluidischen Druckmittels vermag in dieser Konstellation nun die bewegliche erste Magneteinheit entgegen der reduzierten magnetischen Haltekraft von der zweiten Magneteinheit zu beabstanden, wodurch die Ventileinheit geöffnet wird. Wird die externe Magneteinheit hingegen wieder von der Ventileinheit entfernt, so dominiert die magnetische Haltekraft und zieht die erste Magneteinheit wieder gegen den mechanischen Anschlag, wodurch der Hohlkanal fluiddicht abgeschlossen wird.

Zur weiteren Beschreibung der Ventileinheit sowohl hinsichtlich möglicher konstruktiver sowie auch funktioneller Ausprägungen wird der Einsatz der Ventileinheit im Rahmen einer Dosiervorrichtung erläutert, mit der es möglich ist einen Mediumaustrag mittels einer Kartuschen-Nadelanordnung in höchst präziser Weise vorzunehmen.

Das lösungsgemäß ausgebildete Dosiersystem zum dosierten Ausbringen eines Mediums aus einer Kartuschen-Nadelanordnung, deren Kartusche mit der Nadelanordnung über wenigstens einen Hohlkanal in Verbindung steht und ein offen ausgebildetes Kartuschenende aufweist, auf das ein Druckmittel lastet, dass durch Druckbeaufschlagung das innerhalb der Kartusche bevorratete Medium in Richtung der Nadelanordnung zum Austrag zu treiben vermag zeichnet sich dadurch aus, dass zwischen der Kartusche und der Nadelanordnung längs des Hohlkanals wenigstens eine Magnetventileinheit vorgesehen ist, die den Hohlkanal fluiddicht abdichtet und dies ausschließlich unter Aufbringung einer magnetischen Haltekraft, die, wie im weiteren im einzelnen ausgeführt wird, zwischen zwei Magneteinheiten wirkt, die den zwischen der Nadelanordnung und der Kartusche vorgesehenen Hohlkanal fluiddicht abzudichten vermag. Andererseits lastet die durch das auf das Medium einwirkende Druckmittel erzeugte Druckkraft zumindest auf Teilen des Magnetventils, das entgegen der Druckkraft durch die magnetische Haltekraft solange geschlossen bleibt, bis die Druckkraft über die magnetische Haltekraft ansteigt. In diesem Fall geht das Ventil abrupt in eine geöffnete Stellung über, so dass das Medium, das sowohl gasförmig als auch nieder-, mittel- oder hochviskos flüssig sein kann, durch die Ventilanordnung hindurch zur Nadelanordnung strömen kann, von der aus das Medium bspw. auf eine Substratoberfläche ausbringbar ist. Eine Dosierung des Mediumaustrages durch das lösungsgemäße Dosiersystem erfolgt somit durch Regelung der Druckbeaufschlagung des Druckmittels auf das in der Kartusche bevorratete Medium dergestalt, dass die längs des Mediums auf das Magnetventil wirkende Druckkraft je nach gewünschter Magnetventilstellung entweder geringer als die magnetisch bedingte Haltekraft eingestellt wird, bei der das Magnetventil eine geschlossene Stellung einnimmt, oder etwas größer als die magnetische Haltekraft gewählt wird, bei der das Magnetventil in eine geöffnete Stellung überführbar ist.

Das lösungsgemäße Dosiersystem bedarf somit zum Öffnen und Schließen des innerhalb der Kartuschen-/Nadelanordnung integrierten Durchflußregelventils keinerlei externer Energiezuführung am Ort des Durchflussventils, lediglich ist es erforderlich, das innerhalb der Kartusche bevorratete Medium in geeigneter Weise mit unterschiedlichen Druckkräften zu beaufschlagen.

Das lösungsgemäße Dosiersystem sieht hierzu in wenigstens einem Abschnitt längs des Hohlkanals zwischen der Kartusche und der Nadelanordnung wenigstens eine längs zur Durchströmungsrichtung des Mediums durch den Hohlkanal axial beweglich gelagerte erste Magneteinheit vor, die ein erstes Magnetfeld erzeugt. Zudem ist eine zweite Magneteinheit vorgesehen, deren zweites Magnetfeld mit dem ersten Magnetfeld derart in Wechselwirkung tritt, so dass zwischen der ersten und der zweiten Magneteinheit eine die Magneteinheiten axial gegenseitig anziehende Magnetkraft wirkt. Vorzugsweise ist die zweite Magneteinheit axial zur ersten Magneteinheit längs des Hohlkanals beabstandet fest in dem Hohlkanal integriert. Längs des Hohlkanals ist darüber hinaus ein mechanischer Anschlag vorgesehen, gegen den die erste Magneteinheit mit einer durch die Magnetkraft erzeugbaren Haltekraft treibbar ist und dabei eine axiale Position einnimmt, ausschließlich in der die erste Magneteinheit den Hohlkanal fluiddicht abdichtet, während das Medium druckbeaufschlagt axial entgegen der Wirkrichtung der Haltekraft auf die erste Magneteinheit lastet. Ist hingegen die erste Magneteinheit axial von dem mechanischen Anschlag zu beabstanden, wodurch der Hohlkanal freigegeben wird und ein Mediendurchfluß zur Dosiernadel ermöglicht wird, gilt es die Druckbeaufschlagung auf das Medium vermittels des Druckmittels derart zu erhöhen, so dass die durch das Medium auf die erste Magneteinheit ausgeübte Druckkraft größer ist als die magnetische Haltekraft. Hierzu bedarf es einer die Druckbeaufschlagung des Druckmittels variierenden Einheit.

In einer besonders bevorzugten Ausführungsform wird das Druckmittel in eine Druckluftleitung eingesetzt, während die im inneren der Druckluftleitung geführte Druckluft kraftbeaufschlagt axial auf das innerhalb der Kartusche bevorratete Medium drückt. Je nach Vorgabe des längs der Druckluftleitung vorherrschenden Luftdruckes kann die vorstehend beschriebene Magnetventilanordnung geschlossen oder geöffnet werden. Selbstverständlich sind auch andere Möglichkeiten der Druckbeaufschlagung des Mediums denkbar, wie bspw. eine axial geführte Kolbeneinheit.

Die konstruktive Ausbildung des lösungsgemäßen Dosiersystems sowie die dem Dosiersystem zugrundeliegende Funktionsweise werden nachstehend unter Zugrundelegung auf konkrete Ausführungsbeispiele näher erläutert.

Auch wird ein zur Druckregelung alternativer Funktionsmechanismus anhand eines konkreten Ausführungsbeispiels beschrieben, mit dem ein Schließen und Öffnen der Ventileinheit ermöglicht wird und dies ausschließlich unter Nutzung magnetischer Kräfte.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Längsschnittdarstellung durch die lösungsgemäße Kartuschen-Nadelanordnung,
- Fig. 2: Schematisierte Darstellung eines lösungsgemäß ausgebildeten Dosiersystem mit fluidischer Bypassleitung und
- Fig. 3: Längsschnittdetaildarstellung durch eine Ventileinheit im Bereich der Magnetanordnung und
- Fig. 4: Sequenzbilddarstellung zum Öffnen und Schließen einer alternativen Ventilanordnung.

### Wege zur Ausführung der Erfindung, gewerbliche Verwendbarkeit

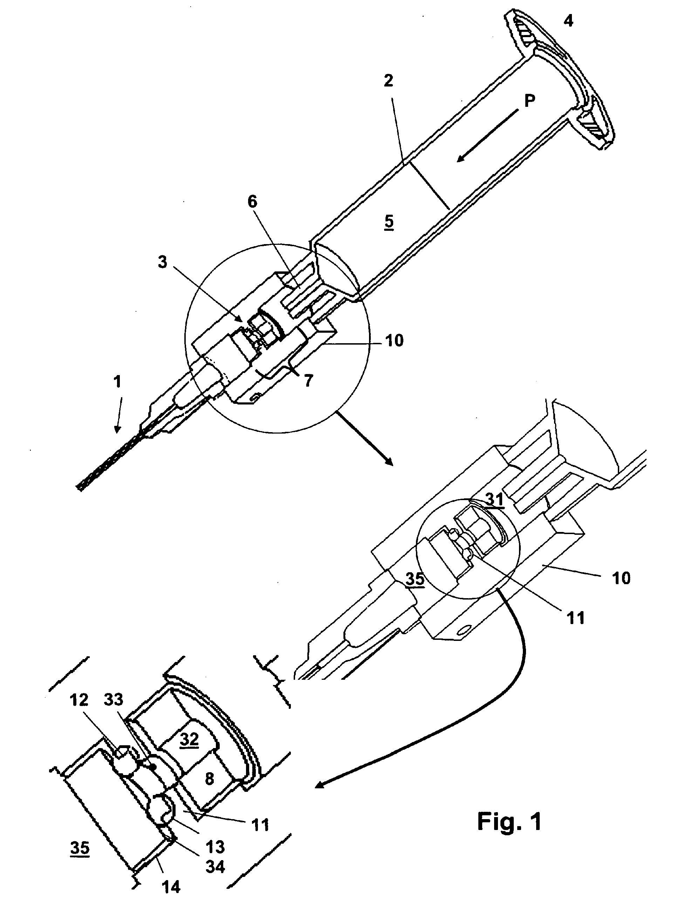

In Figur 1 ist in drei mit unterschiedlichen Vergrößerungsstufen eine Längsschnittdarstellung eines lösungsgemäß ausgebildeten Dosiersystems gezeigt, mit einer Nadelanordnung 1 sowie einer Kartusche 2, die beide über einen die Kartusche 2 sowie die Nadelanordnung 1 fluiddicht verbindenden Hohlkanal 3 verbunden sind. Das in der Bilddarstellung gemäß Figur 1 rechte einseitig offen ausgebildete Kartuschenende 4 ist vorzugsweise luftdicht an eine nicht weiter dargestellten Druckluftleitung angeschlossen, durch die das innerhalb der Kartusche 2 bevorratete Medium 5 unter einen vorgebbaren Druck p dosiert komprimierbar ist. Das sich innerhalb der Kartusche 4 befindliche Medium 5, das seinerseits flüssig oder gasförmig sein kann, wird durch das in Figur 1 dargestellte offen ausgebildete linke Kartuschenende 6 in einen Hohlkanal 3 ausgetragen, längs dem in Durchströmungsrichtung eine Magnetventilanordnung 7 vorgesehen ist, auf deren Funktionsweise unter Bezugnahme auf die in den Detaildarstellungen in Figur 1 dargestellten Längsschnittteildarstellung im weiteren eingegangen wird.

Längs des Hohlkanals 3, der zur weiteren vereinfachten Beschreibung in fünf axiale Teilbereiche 31 bis 35 unterteilt wird, ist eine aus zwei Magneteinheiten 8, 9 bestehende Magnetventilanordnung 7 vorgesehen, von denen die sogenannte zweite Magneteinheit 8 axial fest in einer die Kartusche 2 sowie die Nadelanordnung 1 miteinander verbindende, modular ausgebildete Gehäuseeinheit 10 integriert ist. Die sogenannte zweite Magneteinheit 8 ist als Ringmagnet ausgebildet und weist somit einen inneren Hohlkanal auf, der zugleich auch einen vom Medium 5 durchströmbaren Hohlkanalabschnitt 32 bildet, auf den im weiteren noch eingegangen wird. In Strömungsrichtung (siehe Pfeildarstellung) ist der zweiten Magneteinheit 8 ein Distanzelement 11 nachgeordnet, das gleichsam wie die zweite Magneteinheit 8 eine mittig angebrachte Bohrung vorsieht, die stromab axial fluchtend als weiterer Hohlkanalabschnitt 33 an den Hohlkanalabschnitt 32 anschließt. Stromab wiederum zum Distanzelement 11 ist axial in Längserstreckung des Hohlkanals 3 bzw. bezugnehmend auf die Hohlkanalabschnitte 31 bis 33 axial beweglich zu diesen eine erste Magneteinheit 9 angeordnet. Sowohl die erste als auch zweite Magneteinheit 9, 8 sind jeweils als Permanentmagnete ausgebildet, wobei ihre Magnetpole derart zueinander ausgerichtet sind, dass die Magnetfelder beider Magneteinheiten 8, 9 eine beide Magneteinheiten 8, 9 gegenseitig anziehende Magnetkraft erzeugen. In der in Figur 1 dargestellten Anordnung führt dies zu einer magnetkraftbeaufschlagten Verschiebung der ersten Magneteinheit 9 in Richtung der zweiten Magneteinheit 8 bzw. in Richtung des zwischen beiden Magneteinheiten vorgesehenen Distanzelementes 11. Aus der Detaildarstellung in Figur 1 ist ferner zu entnehmen, dass das Distanzelement 11 zu seiten der ersten Magneteinheit 9 eine den Hohlkanalabschnitt 33 radial umgebende nutförmige Ausnehmung 12 vorsieht, in die ein Dichtelement 13, vorzugsweise in Form eines elastisch verformbaren O-ringes eingesetzt ist.

In dem in Figur 1 dargestellten Zustand sei angenommen, dass die erste Magneteinheit 9 aufgrund der magnetkraftbedingten Anziehungskraft zwischen beiden Magneteinheiten kraftbeaufschlagt axial gegen das in der nutförmigen Ausnehmung 12 vorgesehene Dichtelement 13 drückt, so dass die erste Magneteinheit 9 den Hohlraumbereich der miteinander kommunizierenden Hohlkanalabschnitt 32 und 33 gegen einen Hohlkanalabschnitt 34 fluiddicht abtrennt. Der Hohlkanalabschnitt 34 wird einerseits begrenzt durch die erste Magneteinheit 9, die mit Untermaß innerhalb einer in der Gehäuseeinheit 10 sacklochartig ausgebildeten Ausnehmung 14 eingebracht ist, andrerseits durch die Innenwand der Ausnehmung 14.

In diese Konstellation nimmt die Magnetventileinheit 7 eine geschlossene Stellung ein, in der kein Medium durch die Magnetventilanordnung 7 hindurchströmen kann.

Da jedoch das Medium, das auch im geschlossenen Magnetventilzustand über die Hohlkanalabschnitte 31, 32 und 33 in axialer Richtung auf den in der größten Detaildarstellung schraffiert dargestellten Oberflächenbereich der ersten Magneteinheit 9 lastet, die von dem Dichtelement 13 radial begrenzt wird, kann der geschlossene Magnetventilzustand solange gewährleistet werden, solange die seitens des druckbeaufschlagten Mediums auf die axial bewegliche erste Magneteinheit 9 wirkende Druckkraft kleiner als die magnetkraftbedingte Haltekraft ist, mit der die erste Magneteinheit 9 axial gegen das Dichtelement 13 gepreßt wird.

Wird die Druckkraft seitens des Mediums erhöht und übersteigt dabei die magnetische Haltekraft, so wird die erste Magneteinheit 9 axial in Richtung der Nadelanordnung 1 verschoben, wodurch sich ein Zwischenspalt zwischen der ersten Magneteinheit 9 und dem Dichtelement 13 einstellt, durch den letztlich ein Mediumfluß über den sich anschließenden Hohlkanalabschnitt 34 und 35 einstellt, der letztlich zum dosierten Ausbringen des Mediums durch die Nadelanordnung 1 führt. Sobald die durch das Medium auf die erste Magneteinheit wirkende Druckkraft wieder unter die magnetische Haltekraft absinkt, schließt das Magnetventil 7 selbstständig, indem die erste Magneteinheit 9 fluiddicht gegen das Dichtelement 13 magnetkraftgetrieben angepresst wird.

In vorteilhafter Weise führt eine axiale, entgegen der Durchströmungsrichtung des Magnetventils 7 orientierte Rückbewegung des beweglich gelagerten ersten Magneteinheit 9 zur Erzeugung eines Unterdruckes innerhalb des Hohlkanalbereiches 35, der sich letztlich auch innerhalb der Nadelanordnung einstellt, so dass das Medium beim Schließen der Magnetventilanordnung 7 in der Nadel zurückgezogen wird, wodurch ein störendes Nachtropfen vermieden werden kann.

Für eine möglichst schnelle Betätigung des lösungsgemäßen Dosiersystems zur Ausbringung einer Vielzahl kleinster Medientröpfchen in zeitlich kurzer Aufeinanderfolge ist es vorteilhaft, den auf das in der Kartusche bevorratete Medium wirkenden Arbeitsdruck gerade so zu wählen, dass die mit Hilfe des Druckmittels innerhalb des Mediums erzeugbare Druckkraft, die letztlich axial auf der längsbeweglichen ersten Magneteinheit 9 lastet, nur geringfügig mehr oder weniger um die zwischen beiden Magneteinheiten wirkende Magnetkraft variiert.

Zur Variation der Druckkraft bieten sich mehrere an sich bekannte Möglichkeiten, je nach Wahl des eingesetzten Druckmittels. Handelt es sich, wie bereits vorstehend erwähnt, um eine Druckbeaufschlagung mittels Luftdruck, so kann der Luftdruck mit Hilfe einer geeignet gewählt geregelten Pumpe um einen bestimmten Arbeitsdruck, der der magnetischen Haltekraft entspricht, geregelt werden. Gleichfalls ist es möglich, anstelle einer Druckluftleitung die Druckbeaufschlagung mit Hilfe eines konventionellen Kolbens vorzunehmen, der axial in die einseitig offen ausgebildete Kartusche hineinragt und das in dieser bevorratete Medium geeignet mit Druck beaufschlagt. Zur Druckbeaufschlagung dient in diesem Falle ein entsprechend konzipierter und geregelt betreibbarer Stellantrieb der Kolbeneinheit.

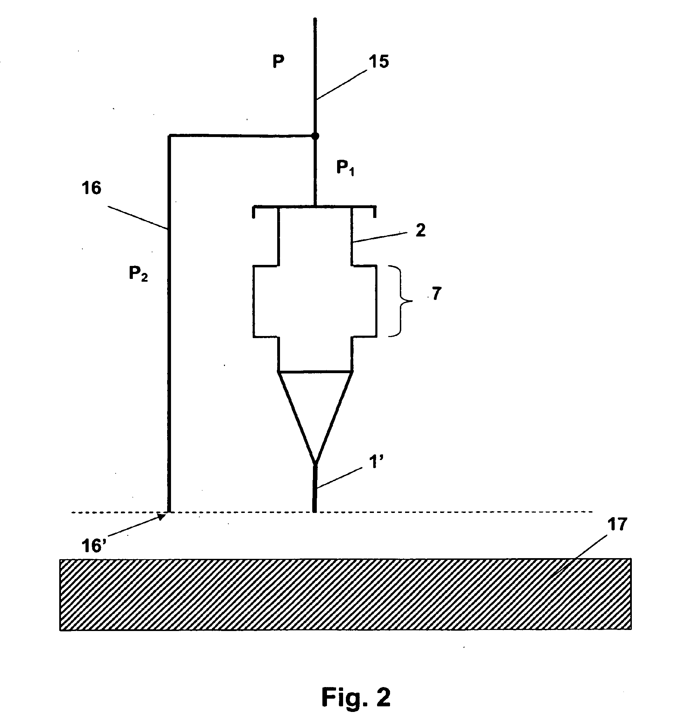

Auf eine weitere Variation der Druckbeaufschlagung wird im Weiteren unter Bezugnahme auf Figur 2 näher eingegangen.

Ebenso ist es möglich, nach Vorgabe entsprechender Permanentmagnete die zwischen beiden Magneteinheiten wirkende Magnetkraft gezielt einzustellen. Dies kann durch Abstandsvariation der beiden sich axial gegenüberliegenden Magneteinheiten 8, 9 vorgenommen werden, beispielsweise durch geeignete Dickenwahl des sich in Axialrichtung erstreckenden Distanzelementes 11.

Vorzugsweise bietet es sich an, die Gehäuseeinheit 10 modular auszubilden und über nicht weiter dargestellte Verbindungsstücke einerseits sowohl an die Nadelanordnung 1 andererseits an die Kartusche 2 lösbar und fluiddicht anzubringen. Hierfür eignen sich an sich bekannte Verbindungsflansche, wie beispielsweise Luer-Lock-Verbindungen. Je nach auszubringendem Medium, insbesondere im Hinblick auf die Viskosität des Mediums, können die Strömungsquerschnitte längs der eingangs erläuterten Hohlkanalabschnitte 31 bis 35, aber insbesondere auch die axiale Dicke des Distanzelement 11 zur Einstellung der zwischen den Magneteinheiten 8, 9 wünschenswert dimensionierten magnetischen Haltekraft gewählt werden.

Als weitere Maßnahme zur Einstellung der seitens des Mediums auf die beweglich angeordnete Magneteinheit 9 lastenden Druckkraft bietet es sich an, den Querschnitt des Hohlkanals in den Hohlkanalabschnitten 32 und 33 entsprechend zu dimensionieren. Gilt es beispielsweise eine möglichst hohe Druckkraft zu generieren, so sollte der Strömungsquerschnitt durch die Hohlkanalabschnitte 32, 33 größer gewählt werden. In diesem Fall nimmt gleichfalls die magnetkrafterzeugte Haltekraft ab, zumal das Magnetvolumen bei der Magneteinheit 8 entsprechend ebenso abnimmt.

In Figur 2 ist ein schematisiert dargestelltes, lösungsgemäß ausgebildetes Dosiersystem bestehend aus der Nadelanordnung 1, der Magnetventilanordnung 7 sowie der Kartusche 2 dargestellt, die zur Druckbeaufschlagung über ihr offenes Kartuschenende 4 mit einer Druckluftleitung 15 verbunden ist. Längs der Druckluftleitung 15 ist eine Bypass-Leitung 16 vorgesehen, so dass sich stromab zum Verzweigungspunkt 17 der längs der Druckluftversorgungsleitung 15 vorgesehene Luftdruck p in die längs der jeweiligen weiterführenden Leitungen 16, 15' herrschenden Teildrücke p1 und p2 aufteilt. Der längs der Teilversorgungsleitung 15' vorherrschende Luftdruck p1 ist gerade so gewählt, dass die hierdurch hervorgerufene Druckkraft kleiner ist als die zwischen den beiden vorstehend erläuterten Magneteinheiten innerhalb der Magnetventilanordnung 7 wirkende Haltekraft, so dass das Magnetventil einen geschlossenen Zustand annimmt. Die Bypass-Leitung 16 weist ihrerseits ein offen mündendes Leitungsende 16' auf, das einen zur Nadelspitze 1' definierten Höhenabstand aufweist. Vorzugsweise befinden sich das Leitungsende 16' und die Nadelspitze 1' auf einem einheitlichen Niveau (siehe strichlierte Linie). Durch Annähern bzw. Aufsetzen des in Figur 2 schematisiert dargestellten Dosiersystems auf die Oberfläche eines Substrats 17 nimmt der Staudruck am Leitungsende der Bypass-Leitung 16 zu, wodurch der Druck längs der Teilversorgungsleitung 15' ansteigt. Es kommt dadurch zum Überschreiten der magnetisch erzeugten Haltekraft seitens der durch das Medium ausgeübten Druckkraft auf die längs bewegliche Magneteinheit, wodurch das Magnetventil 7 öffnet. Beim Abheben des Dosiersystems von der Oberfläche des Substrats 17 verringert sich gleichsam die durch das Medium auf die bewegliche Magneteinheit lastende Druckkraft und das Ventil schließt selbstständig.

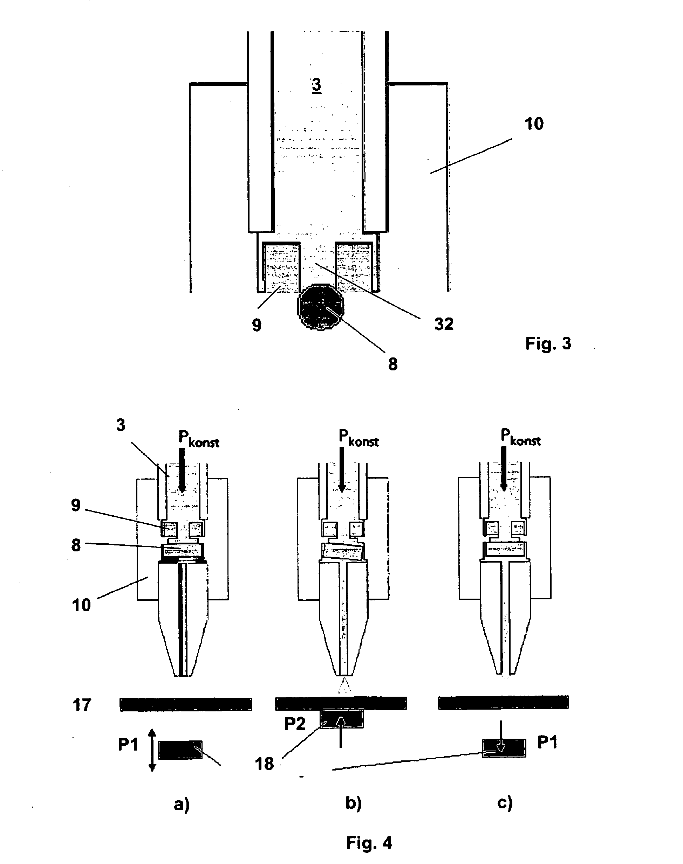

Fig. 3 zeigt einen stark schematisierten Detail-Längsschnitt durch eine Ventilanordnung im Bereich der ersten und zweiten Magneteinheit. Im Einzelnen sei angenommen, dass die fest im Hohlkanal 3 angeordnete zweite Magneteinheit 8 einen den Hohlkanal 3 begrenzenden Hohlkanalabschnitt 32 aufweist, an dessen strömungsseitigen Austritt eine kugelförmig ausgebildete erste Magneteinheit 9 vorgesehen ist, wobei die erste Magneteinheit 9 einen maximalen Kugeldurchmesser aufweist, der größer bemessen ist als der Strömungsquerschnitt durch den Hohlkanalabschnitt 32 der zweiten Magneteinheit 8. Auf diese Weise wird verhindert, dass die zwischen den Magneteinheiten 8 und 9 wirkende anziehende magnetische Haltekraft die freibewegliche erste Magneteinheit 9 in den Hohlkanalabschnitt 32 zu ziehen vermag und andererseits wird sichergestellt, dass bei einem eng anliegenden Kontakt zwischen der kugelförmigen ersten Magneteinheit 9 mit der im Querschnitt kreisrund ausgebildeten Durchtrittsöffnung der zweiten Magneteinheit 8 ein fluiddichter Abschluss zwischen beiden Magneteinheiten hergestellt wird. Um die Fluiddichtheit zu verbessern ist es überdies möglich, den Rand der Austrittsöffnung an der Magneteinheit 8 leicht anzuphasen, so dass bei einem innig eng anliegendem Zustand zwischen der kugelförmig ausgebildeten ersten Magneteinheit 9 an der zweiten Magneteinheit 8 kein Fluiddurchfluss durch die Ventilanordnung zustande kommt (wie dies in der Bilddarstellung gemäß Fig. 3 der Fall ist). Wird hingegen beispielsweise der Strömungsdruck über die magnetische Haltekraft zwischen beiden Magneteinheiten erhöht, so weicht die kugelförmig ausgebildete Magneteinheit 9 für gewöhnlich seitlich zur Strömungsrichtung aus und bleibt an der in Strömungsrichtung unteren ringförmigen Kreisfläche der zweiten Magneteinheit 8 selbständig haften. Um zu vermeiden, dass bei einem vollständigen Ablösen der kugelförmigen ersten Magneteinheit 9 von der zweiten Magneteinheit 8 diese von der Fluidströmung regelrecht mitgerissen wird, gilt es stromab zur zweiten Magneteinheit 8 für entsprechende Vorkehrungen zu treffen, um die kugelförmige Magneteinheit 9 entsprechend nahe an der Magneteinheit 8 zu belassen.

Die Fig. 4a bis c zeigen drei Sequenzbilder in zeitlicher Abfolge, in denen jeweils ein schematisierter Längsschnitt durch eine lösungsgemäße Weiterbildung der Ventilanordnung dargestellt ist. Auf die nochmalige Erläuterung der mit den bekannten Bezugszeichen bereits beschriebenen Komponenten der Ventilanordnung wird aus Gründen einer Wiederholung verzichtet und auf die vorstehende Beschreibung verwiesen.

Im Unterschied zur Ansteuerung der Ventilanordnung über eine Druckregelung längs des Strömungskanals sei angenommen, dass im Falle der Fig. 4 der Arbeitsdruck p, mit dem ein durch die Ventilanordnung auszubringendes Fluid längs des Hohlkanals 3 anliegt, konstant ist.

Zum Öffnen der Ventilanordnung wird eine zusätzliche, auf die beweglich angeordnete erste Magneteinheit 9 gerichtete Kraft zu generiert, die die zwischen beiden Magneteinheiten 8 und 9 wirkende Haltekraft zu reduzieren vermag, zumindest soweit zureduzieren vermag, dass sich die bewegliche Magneteinheit 9 durch den konstanten Arbeitsdruck p von der zweiten Magneteinheit 8 beabstandet. Hierzu wird bspw. eine externe Magneteinheit 18 unterhalb des Substrats 17 vorgesehen, die in der angegebenen Weise zumindest linear beweglich gelagert ist und aus einer entfernten, zur Ventilanordnung ersten Position P1 in eine zweite Position P2 kurzzeitig überführbar ist, in der die externe Magneteinheit 18 einen verkürzten Abstand zur Ventileinheit einnimmt, wodurch am Ort der ersten Magneteinheit 9 ein durch die externe Magneteinheit 18 wirksames externes Magnetfeld vorherrscht, das die Magneteinheit 9 gemeinsam mit dem vorherrschenden Arbeitsdruck p mit hilft entgegen der Haltekraft zwischen der ersten und zweiten Magneteinheit auszulenken vermag. Diese Situation ist in der mittleren Bilddarstellung gemäß Fig. 4 dargestellt. Gilt es, die Ventileinheit zu schließen, so bedarf es lediglich die externe Magneteinheit 18 von der Ventileinheit zu beabstanden gemäß der beiden anderen Bilddarstellungen in Fig. 4. So sei angenommen, dass die externe Magneteinheit 18 als Permanentmagnett ausgebildet ist und eine Linearauslenkung axial zur Längserstreckung des Hohlkanals 3 der mechanisch in geeigneter Weise gelöst wird. Alternativ ist es jedoch ebenso möglich, die externe Magneteinheit 18 als Elektromagneteinheit auszubilden, so dass die in den Fig. 4a bis c dargestellte axiale Magnetauslenkung nicht erforderlich ist. In diesem Falle bedarf es lediglich einer Aktivierung bzw. Deaktivierung des entsprechend vorgesehenen Elektromagneten.

An dieser Stelle sei repräsentativ für alle möglichen Ausführungsformen erwähnt, dass vorzugsweise die erste Magneteinheit 9, die relativ zur zweiten Magneteinheit 8 beweglich angeordnet ist, nicht notwendigerweise aus einem Permanentmagneten bestehen muss. Vielmehr ist die vorstehend beschriebene Funktionsweise auch realisierbar, sofern die zweite Magneteinheit 8 als Permanentmagnet ausgebildet ist und die erste Magneteinheit 9 zumindest ferromagnetisches Material aufweist.

Das lösungsgemäße Dosiersystem erlaubt durch das Vorsehen eines geeignet gewählten Dichtmittels den Einsatz sowohl für flüssige als auch gasförmige Medien, die es in dosierter Form über eine Kartuschennadelanordnung auszubringen gilt. In Abhängigkeit von den Öffnungs- und Schließzeiten, mit den das lösungsgemäß ausgebildete Magnetventil betreibbar ist können sehr fein und reproduzierbar sowohl punktförmige Materialabscheidungen in Form sogenannter Dots als auch Materiallinien auf entsprechenden Substratoberflächen dosiert ausgebracht werden. Durch die entgegen der Durchströmungsrichtung orientierte Rückbewegung der axial längsbeweglich angeordneten Magneteinheit wird während des Schließvorganges ein schneller Druckabbau innerhalb der Nadelanordnung erzielt, der gleichzeitig zu einem Zurückziehen des innerhalb des Nadelrohrs befindlichen Mediums führt, wodurch ein Nachtropfen vollständig verhindert werden kann.

Ferner verfügt die lösungsgemäße Ventileinheit über eine besonders hohe Schließ- und Öffnungsdynamik, d.h. die Ansprechzeiten für ein Öffnen und einen unmittelbar darauf folgenden Mediumdurchfluss sind besonders kurz. Dies begründet sich darin, dass im geschlossenen Zustand der Ventileinheit das Medium druckbeaufschlagt auf der axial beweglichen, ersten Magneteinheit lastet. Es bedarf zum Öffnen der Ventileinheit lediglich einen geringen, die magnetische Haltekraft übersteigenden zusätzlichen Strömungsdruck, der jedoch von dem die Ventileinheit im geöffneten Zustand durchströmenden Medium selbst aufgebracht wird.

Als besonderen Vorteil des lösungsgemäß ausgebildeten Dosiersystems gilt es den vollständigen Verzicht auf elektrisch ansteuerbare Komponenten zu nennen, so dass keine das Dosierergebnis negativ beeinflussende Wärmeerzeugung auftritt. Dies begründet auch die geringe Störanfälligkeit des Dosiersystems, zumal dessen Funktionsweise ausschließlich auf der einstellbaren Balance zwischen dem durch das auszubringende Medium herrschenden Strömungsdruck und der zwischen beiden Magneteinheiten wirkenden Magnetkraft basiert. Diese nahezu energetisch autarke Funktionsweise des Dosiersystems bietet auch die ideale Vorraussetzung für eine kostengünstige Realisierung, beispielsweise in Form eines Einweg-Systems, zumal an Einweg-Systemen die Forderung zu stellen ist, dass sie keine hochwertigen und gegebenenfalls getrennt zu entsorgenden Komponenten aufweisen sollen. Gleichwohl sind damit gute dynamische Eigenschaften erreichbar. Auch eignet sich das lösungsgemäße Dosiersystem vorbildlich für die Serienfertigung in großer Stückzahl.

Das lösungsgemäße Dosiersystem bietet entweder die Möglichkeit die Nadelanordnung, die Magnetventilanordnung sowie auch die Kartusche als einheitliche, kompakte Bauform zu realisieren oder aber in Form getrennter modularer Komponenten auszufertigen, wobei im letzteren Fall die Magnetventilanordnung mit an sich bekannten Nadelanordnungen und Kartuschenanordnungen über geeignet gewählte standardisierte Flanschverbindungen adaptierbar ist. Die modulare Bauweise ermöglicht darüber hinaus eine einfache Handhabung, Reinigung und Wartung sowie eine Anpassung auf unterschiedliche Kartuschengrößen.

Die in dem Dosiersystem integrierte Magnetventileinheit selbst verfügt über einen modularen Aufbau, der zum einen eine unproblematische Fertigung, zum anderen aber auch eine Reinigung oder Wartung der einzelnen Komponenten der Ventileinheit ohne großen Arbeitsaufwand ermöglicht. So können je nach aktuellen Einsatz- und Betriebsbedingungen einzelne Komponenten der Magnetventileinheit ausgewählt und ausgetauscht werden, bspw. ein Austausch des Distanzelementes durch ein geeignet gewähltes anderes Distanzelement ist ohne weiteres möglich. Durch die leichte und unproblematische Montage können auch die Herstellungskosten gering gehalten werden, wodurch sich die lösungsgemäße Magnetventileinheit besonders gut für die Ausbildung als Einweg-Artikel eignet, der in großer Stückzahl gefertigt werden kann.

Durch die hohe Integrationsfähigkeit sowie Miniaturisierbarkeit des lösungsgemäßen Dosiersystems ist es überdies möglich, mehrere Ventilanordnungen zu einem Array-Dispenser-Werkzeug zu kombinieren um beispielsweise ein paralleles Dispensen eines Mediums an jeweils unterschiedlichen Stellen auf einem Substrat zu ermöglichen.

### Bezugszeichenliste

- 1: Nadelanordnung
- 2: Kartusche
- 3: Hohlkanal
- 4: offenes Kartuschenende
- 5: Medium
- 6: offenes Kartuschenende
- 7: Magnetventilanordnung
- 8: zweite Magneteinheit
- 9: erste Magneteinheit
- 10: Gehäuseeinheit
- 11: Distanzelement
- 12: nutförmige Ausnehmung
- 13: Dichtelement
- 14: sacklochartige Bohrung
- 15: Druckluftleitung
- 16: Bypass-Leitung
- 16': offenes Bypass-Leitungsende
- 17: Substrat
- 18: Externe Magneteinheit

## Patentansprüche

1. Ventileinheit zum Unterbrechen oder Freigeben eines Durchflusses eines Mediums längs eines Hohlkanals (3), das Druckbeaufschlagt längs des Hohlkanals (3) strömt,
**dadurch gekennzeichnet, dass**
wenigstens in einem Abschnitt längs des Hohlkanals (3) wenigstens eine längs zur Durchströmungsrichtung des Mediums durch den Hohlkanal (3) axial beweglich gelagerte erste Magneteinheit (9), zur Erzeugung eines ersten Magnetfeldes vorgesehen ist,
dass eine zweite Magneteinheit (8) vorgesehen ist, deren zweites Magnetfeld mit dem ersten Magnetfeld derart in Wechselwirkung tritt, so dass zwischen der ersten (9) und der zweiten Magneteinheit (8) eine die Magneteinheiten axial gegenseitig anziehende Magnetkraft wirkt,
dass längs des Hohlkanals (3) ein mechanischer Anschlag vorgesehen ist, gegen den die erste Magneteinheit (9) mit einer durch die Magnetkraft erzeugbaren Haltekraft treibbar ist und dabei eine axiale Position einnimmt, ausschließlich in der die erste Magneteinheit (9) den Hohlkanal (3) fluiddicht abdichtet, während das Medium Druckbeaufschlagt axial entgegen der Wirkrichtung der Haltekraft auf die erste Magneteinheit (9) lastet,
dass in Durchströmungsrichtung stromab zur zweiten Magneteinheit (8) ein von dem Medium in Durchströmungsrichtung um- und/oder durchströmbares Distanzelement (11) vorgesehen ist, das die zweite (8) von der ersten Magneteinheit (9) axial beabstandet, und
dass eine Einheit vorgesehen ist, mit der eine auf die erste Magneteinheit (9) entgegen der Haltekraft einwirkende, variabel vorgebbare Kraft erzeugbar ist und als eine die Druckbeaufschlagung des Mediums variierende Einheit ist.

2. Ventileinheit zum Unterbrechen oder Freigeben eines Durchflusses eines Mediums längs eines Hohlkanals (3), das Druckbeaufschlagt längs des Hohlkanals strömt,
**dadurch gekennzeichnet, dass**
wenigstens in einem Abschnitt längs des Hohlkanals (3) wenigstens eine längs zur Durchströmungsrichtung des Mediums durch den Hohlkanal (3) axial beweglich gelagerte erste Magneteinheit (9), zur Erzeugung eines ersten Magnetfeldes vorgesehen ist,
dass eine zweite Magneteinheit (8) vorgesehen ist, deren zweites Magnetfeld mit dem ersten Magnetfeld derart in Wechselwirkung tritt, so dass zwischen der ersten (8) und der zweiten Magneteinheit (9) eine die Magneteinheiten axial gegenseitig anziehende Magnetkraft wirkt,
dass längs des Hohlkanals (3) ein mechanischer Anschlag vorgesehen ist, gegen den die erste Magneteinheit (8) mit einer durch die Magnetkraft erzeugbaren Haltekraft treibbar ist und dabei eine axiale Position einnimmt, ausschließlich in der die erste Magneteinheit (8) den Hohlkanal (3) fluiddicht abdichtet, während das Medium Druckbeaufschlagt axial entgegen der Wirkrichtung der Haltekraft auf die erste Magneteinheit (8) lastet,
dass in Durchströmungsrichtung stromab zur zweiten Magneteinheit (9) ein von dem Medium in Durchströmungsrichtung um- und/oder durchströmbares Distanzelement (11) vorgesehen ist, das die zweite (8) von der ersten Magneteinheit (9) axial beabstandet, und
dass eine Einheit vorgesehen ist, mit der eine auf die erste Magneteinheit (9) entgegen der Haltekraft einwirkende, variabel vorgebbare Kraft erzeugbar ist und in Form einer Permanent- oder Elektromagneteinheit ausgebildet ist, die getrennt zum Hohlkanal (3) angeordnet ist und ein externes Magnetfeld erzeugt, das in Wechselwirkung mit der ersten Magneteinheit (9) bringbar ist.

3. Ventileinheit nach Anspruch 1 oder 2,
**dadurch gekennzeichnet, dass** die zweite Magneteinheit (8) den Hohlkanal (3) zumindest in einem Abschnitt ringförmig umgibt oder diesen zumindest teilweise mittel- oder unmittelbar begrenzt.

4. Ventileinheit nach einem der Ansprüche 1 bis 3,
**dadurch gekennzeichnet, dass** in Durchströmungsrichtung stromab zum Distanzelement (11) und stromauf zur ersten Magneteinheit (9) ein Dichtmittel (13) derart vorgesehen ist, dass das Dichtmittel (13) von der ersten Magneteinheit (9) fluiddicht gegen das Distanzelement (11) gepresst wird, sofern sich die erste Magneteinheit (9) in der axialen Position befindet, ausschließlich in der die erste Magneteinheit (9) den Hohlkanal (3) fluiddicht abdichtet.

5. Ventileinheit nach einem der Ansprüche 1 bis 4,
**dadurch gekennzeichnet, dass** im axialen Bereich des Hohlkanals (3), längs dem die erste Magneteinheit (9) axial beweglich gelagert ist, ein Hohlkanalquerschnitt vorgesehen ist, der größer ist als ein der ersten Magneteinheit (9) zuordenbarer Querschnitt, so dass radial zwischen einer dem Hohlkanal (3) zuordenbaren Hohlkanalwand und der ersten Magneteinheit (9) ein vom Medium durchströmbarer Hohlraum vorgesehen ist.

6. Ventileinheit nach einem der Ansprüche 1 bis 5,
**dadurch gekennzeichnet, dass** der Abschnitt des Hohlkanals (3), in dem die erste (9) und zweite Magneteinheit (8) angeordnet sind, als modulare Baueinheit ausgebildet und von einem Gehäuse (10) umgeben ist, das zwei Anschlussadapter zur fluiddichten Verbindung an die Hohlleitung vorsieht.

7. Ventileinheit nach einem der Ansprüche 1 bis 6,
**dadurch gekennzeichnet, dass** eine der beiden Magneteinheiten (8, 9) als Permanentmagnet ausgebildet ist und die andere Magneteinheit (18) ferromagnetisches Material aufweist.

8. Ventileinheit nach Anspruch 1,
**dadurch gekennzeichnet, dass** die Einheit als Pumpe ausgebildet ist, die das Medium druckvariabel durch den Hohlkanal (3) fördert.

9. Ventileinheit nach Anspruch 2,
**dadurch gekennzeichnet, dass** die Magneteinheit (18) zur Erzeugung des externen Magnetfeldes relativ zur ersten Magneteinheit (9) beweglich gelagert ist und wenigstens in zwei Positionen überführbar ist, einer ersten Position, in der das externe Magnetfeld die erste Magneteinheit (9) gemeinsam mit dem auf die erste Magneteinheit (9) lastenden Arbeitsdruck durch das Druckmittel entgegen der Haltekraft in einer offenen Stellung hält, in der die erste Magneteinheit (9) vom mechanischen Anschlag beabstandet ist, sowie eine zweite Position, in der die erste Magneteinheit den Hohlkanal (3) fluiddicht abdichtet.

10. Ventileinheit nach einem der Ansprüche 1 bis 9,
**dadurch gekennzeichnet, dass** die erste Magneteinheit (9) kugelförmig ausgebildet ist, und einen Kugeldurchmesser aufweist der größer ist als der Hohlkanalquerschnitt,
dass die zweite Magneteinheit (8) den Hohlkanal (3) abschnittsweise umgibt oder diesen bildet, und
dass die erste Magneteinheit (9) unmittelbar an der zweiten Magneteinheit (8) anliegt und den Hohlkanal (3) fluiddicht abdichtet.

11. Verwendung der Ventileinheit nach einem der Ansprüche 1, 3 bis 8 oder 10 in einem Dosiersystem zum dosierten Ausbringen eines Mediums aus einer Kartuschen-Nadelanordnung, deren Kartusche (2) mit der Nadelanordnung (1) über wenigstens einen Hohlkanal (3) in Verbindung steht und ein offen ausgebildetes Kartuschenende (4) aufweist, auf das ein Druckmittel lastet, das durch Druckbeaufschlagung das innerhalb der Kartusche (2) vorgesehene Medium in Richtung der Nadelanordnung (1) zum Austrag zu treiben vermag,
**dadurch gekennzeichnet, dass** die Ventileinheit längs des Hohlkanals (3) eingebracht ist und
dass eine die Druckbeaufschlagung des Druckmittels variierende Einheit vorgesehen ist, durch die das Medium druckbeaufschlagt wird.

12. Verwendung der Ventileinheit nach einem der Ansprüche 2 bis 7, 9 oder 10 in einem Dosiersystem zum dosierten Ausbringen eines Mediums aus einer Kartuschen-Nadelanordnung, deren Kartusche (2) mit der Nadelanordnung (1) über wenigstens einen Hohlkanal (3) in Verbindung steht und ein offen ausgebildetes Kartuschenende (4) aufweist, auf das ein Druckmittel lastet, das durch Druckbeaufschlagung das innerhalb der Kartusche (2) vorgesehene Medium in Richtung der Nadelanordnung (1) zum Austrag zu treiben vermag,
**dadurch gekennzeichnet, dass** die Ventileinheit längs des Hohlkanals (3) eingebracht ist und
dass eine externe Magneteinheit (18), in Form einer Permanent- oder Elektromagneteinheit, vorgesehen ist, die getrennt zum Hohlkanal (3) angeordnet ist und ein externes Magnetfeld erzeugt, das in Wechselwirkung mit der ersten Magneteinheit (9) bringbar ist und diese entgegen der Haltekraft gemeinsam mit dem Druckmittel auszulenken vermag.

13. Verwendung nach Anspruch 11 oder 12,
**dadurch gekennzeichnet, dass** das Druckmittel in Form einer druckbeaufschlagten Fluidleitung ausgebildet ist, die an die einseitig offen ausgebildete Kartusche (2) angeschlossen ist, und
dass das in der Fluidleitung geführte Fluid druckbeaufschlagt auf das in der Kartusche (2) bevorratete Medium druckbeaufschlagt wirkt,
dass längs der Fluidleitung stromauf zum Anschluss an die Kartusche (2) eine Fluidbypassleitung (16) vorgesehen ist, die derart ausgebildet ist, dass über die Fluidbypassleitung (16) ein Teil des die Fluidleitung passierenden Fluidstromes ableitbar ist, und
dass die Fluidbypassleitung (16) über ein offenes Leitungsende verfügt, das im Bereich neben einer der Nadelanordnung (1) zuordenbare Nadelspitze angeordnet ist.

14. Verwendung nach einem der Ansprüche 11 bis 13,
**dadurch gekennzeichnet, dass** die die Druckbeaufschlagung des Druckmittels variierende Einheit derart ausgebildet ist, dass die durch das Druckmittel auf die erste Magneteinheit (9) wirkende Druckkraft von einem Kraftwert, der größer als die Haltekraft ist, auf einen Kraftwert, der kleiner als die Haltekraft ist, variierbar oder schaltbar ist und umgekehrt.

15. Verwendung nach Anspruch 12,
**dadurch gekennzeichnet, dass** die externe Magneteinheit (18) beabstandet zur Nadelanordnung (1), dieser in Nadellängsrichtung gegenüberliegend angeordnet ist, und
dass die externe Magneteinheit (18) zwischen wenigstens zwei zur Nadellängsrichtung axialen Positionen bewegbar ist, einer ersten Position, in der das externe Magnetfeld die erste Magneteinheit (9) gemeinsam mit dem auf die erste Magneteinheit (9) lastenden Arbeitsdruck durch das Druckmittel entgegen der Haltekraft in einer offenen Stellung hält, in der die erste Magneteinheit (9) vom mechanischen Anschlag beabstandet ist, sowie eine zweite Position, in der die erste Magneteinheit (9) den Hohlkanal (3) fluiddicht abdichtet.

16. Verfahren zum dosierten Ausbringen eines Mediums aus einer Kartuschen-Nadelanordnung, deren Kartusche (2) mit der Nadelanordnung (1) über wenigstens einen Hohlkanal (3) in Verbindung steht und ein offen ausgebildetes Kartuschenende (4) aufweist, auf das ein Druckmittel lastet, das durch Druckbeaufschlagung das innerhalb der Kartusche (2) vorgesehene Medium in Richtung der Nadelanordnung zum Austrag zu treiben vermag,
**dadurch gekennzeichnet,**
- **dass** längs des Hohlkanals (3) ein Magnetventil (7) vorgesehen wird, auf das das Medium druckbeaufschlagt wirkt und das den Hohlkanal (3) entgegen einer durch das Medium auf das Magnetventil (7) lastenden Druckkraft ausschließlich unter Wirkung einer durch Magnetkraft erzeugbaren Haltekraft fluiddicht abdichtet und
- **dass** ein Öffnen des Magnetventils (7) durch kontrolliertes Überhöhen der Druckkraft über die Haltekraft und ein Schließen des Magnetventils (7) durch kontrolliertes Absenken der Druckkraft unter die Haltekraft erfolgt.

17. Verfahren zum dosierten Ausbringen eines Mediums aus einer Kartuschen-Nadelanordnung, deren Kartusche (2) mit der Nadelanordnung (1) über wenigstens einen Hohlkanal (3) in Verbindung steht und ein offen ausgebildetes Kartuschenende (4) aufweist, auf das ein Druckmittel lastet, das durch Druckbeaufschlagung das innerhalb der Kartusche (2) vorgesehene Medium in Richtung der Nadelanordnung (1) zum Austrag zu treiben vermag,
**dadurch gekennzeichnet,**
- **dass** längs des Hohlkanals (3) ein Magnetventil (7) vorgesehen wird, auf das das Medium druckbeaufschlagt wirkt und das den Hohlkanal (3) entgegen einer durch das Medium auf das Magnetventil (7) lastenden Druckkraft ausschließlich unter Wirkung einer durch Magnetkraft erzeugbaren Haltekraft fluiddicht abdichtet
und
**dass** ein Öffnen des Magnetventils (7) durch kontrolliertes Vorsehen eines externen Magnetfeldes erfolgt, durch das eine die Haltekraft reduzierende Magnetkraft erzeugt wird, und ein Schließen des Magnetventils (7) durch Reduzieren des externen Magnetfeldes erfolgt.

18. Verfahren nach Anspruch 16 oder 17,
**dadurch gekennzeichnet, dass** als Druckmittel ein druckbeaufschlagtes Fluid verwendet wird, das über eine Fluidleitung an die Kartusche (2) angeschlossen wird, und dass das kontrollierte Überhöhen und Absenken der Druckkraft durch Variation eines längs der Fluidleitung vorherrschenden Strömungsdrucks vorgenommen wird.

19. Verfahren nach Anspruch 18,
**dadurch gekennzeichnet, dass** die Variation des längs der Fluidleitung vorherrschenden Strömungsdrucks durch Ableiten eines Teils der Fluidströmung durch eine Fluidbypassleitung erfolgt, und
dass ein sich längs der Fluidbypassleitung einstellender Strömungsdruck durch Variation eines an einem offenen Ende der Fluidbypassleitung kontrolliert einstellbaren Staudruck erzeugt wird.

## Claims

1. A valve unit for interrupting or releasing a through flow of the medium along a hollow channel (3), which flows along the hollow channel (3) under the application of pressure,
**characterized in that** at least one first magnet unit (9) for generating a first magnetic field, which is mounted so it is axially movable along the through flow direction of the medium through the hollow channel (3), is provided in at least one section along the hollow channel (3),
a second magnet unit (8), whose second magnetic field interacts with the first magnetic field in such a way that a magnetic force which mutually attracts the magnet units acts between the first magnet unit (9) and the second magnet unit (8),
a mechanical stop is provided along the hollow channel (3), against which the first magnet unit (9) is drivable with a retaining force which can be generated by the magnetic force and assumes an axial position, exclusively in which the first magnet unit (9) seals the hollow channel (3) fluid-tight, while the medium loads the first magnet unit (9) under the application of pressure axially opposite to the action direction of the retaining force,
and a spacer element (11), around and/or through which the medium can flow in the through flow direction, is provided upstream from the second magnet unit (8) in the through flow direction, which axially spaces apart the second magnet unit (8) from the first magnet unit (9), and
a unit is provided, using which a variably predefinable force, which acts on the first magnet unit (9) opposite to the retaining force, can be generated and is a unit which varies the pressure application to the medium.

2. A valve unit for interrupting or releasing a through flow of the medium along a hollow channel (3), which flows along the hollow channel (3) under the application of pressure,
**characterized in that** at least one first magnet unit (9) for generating a first magnetic field, which is mounted so it is axially movable along the through flow direction of the medium through the hollow channel (3), is provided in at least one section along the hollow channel (3),
a second magnet unit (8), whose second magnetic field interacts with the first magnetic field in such a way that a magnetic force which mutually attracts the magnet units acts between the first magnet unit (9) and the second magnet unit (8),
a mechanical stop is provided along the hollow channel (3), against which the first magnet unit (9) is drivable with a retaining force which can be generated by the magnetic force and assumes an axial position, exclusively in which the first magnet unit (9) seals the hollow channel (3) fluid-tight, while the medium loads the first magnet unit (9) under the application of pressure axially opposite to the action direction of the retaining force,
and a spacer element (11), around and/or through which the medium can flow in the through flow direction, is provided upstream from the second magnet unit (8) in the through flow direction, which axially spaces apart the second magnet unit (8) from the first magnet unit (9), and
a unit is provided, using which a variably predefinable force, which acts on the first magnet unit (9) opposite to the retaining force, can be generated, and is implemented in the form of a permanent or electromagnet unit, which is situated separately from the hollow channel (3) and generates an external magnetic field, which can be caused to interact with the first magnet unit (9).

3. The valve unit according to Claim 1 or 2,
**characterized in that** the second magnet unit (8) encloses the hollow channel (3) in a ring shape in at least one section or at least partially indirectly or directly delimits it.

4. The valve unit according to one of Claims 1 to 3,
**characterized in that** a sealing means (13) is provided downstream from the spacer element (11) and upstream from the first magnet unit (9) in the through flow direction in such a way that the sealing means (13) is pressed fluid-tight against the spacer element (11) by the first magnet unit (9), if the first magnet unit (9) is located in the axial position, exclusively in which the first magnet unit (9) seals the hollow channel (3) fluid-tight.

5. The valve unit according to one of Claims 1 to 4,
**characterized in that**, in the axial area of the hollow channel (3), along which the first magnet unit (9) is mounted so it is axially movable, a hollow channel cross-section is provided, which is larger than a cross-section assignable to the first magnet unit (9), so that a cavity through which medium can flow is provided radially between a hollow channel wall assignable to the hollow channel (3) and the first magnet unit (9).

6. The valve unit according to one of Claims 1 to 5,
**characterized in that** the section of the hollow channel (3) in which the first magnet unit (9) and second magnet unit (8) are situated is implemented as a modular component and is enclosed by a housing (10), which provides two connecting adapters for the fluid-tight connection to the hollow line.

7. The valve unit according to one of Claims 1 to 6,
**characterized in that** one of the two magnet units (8, 9) is implemented as a permanent magnet and the other magnet unit (18) has ferromagnetic material.

8. The valve unit according to Claim 1,
**characterized in that** the unit is implemented as a pump, which conveys the medium at variable pressure through the hollow channel (3).

9. The valve unit according to Claim 2,
**characterized in that** the magnet unit (18) for generating the external magnetic field is mounted so it is movable relative to the first magnet unit (9) and is transferable into at least two positions, a first position, in which the external magnetic field holds the first magnet unit (9), jointly with the work pressure loading the first magnet unit (9) by the pressure medium against the retaining force, in an open position, in which the first magnet unit (9) is spaced apart from the mechanical stop, and a second position, in which the first magnet unit seals the hollow channel (3) fluid-tight.

10. The valve unit according to one of Claims 1 to 9,
**characterized in that** the first magnet unit (9) is implemented as spherical and has a sphere diameter which is larger than the hollow channel cross-section,
the second magnet unit (8) sectionally encloses the hollow channel (3) or forms it, and
the first magnet unit (9) presses directly against the second magnet unit (8) and seals the hollow channel (3) fluid-tight.

11. A use of the valve unit according to one of Claims 1, 3 to 8, or 10 in a metering system for the metered delivery of a medium from a cartridge-needle arrangement, whose cartridge (2) is connected to the needle arrangement (1) via at least one hollow channel (3) and has an open cartridge end (4), which is loaded by a pressure medium, which is capable of driving the medium provided inside the cartridge (2) in the direction of the needle arrangement (1) for the discharge by application of pressure,
**characterized in that** the valve unit is introduced along the hollow channel (3), and
a unit which varies the pressure application to the pressure medium is provided, by which pressure is applied to the medium.

12. A use of the valve unit according to one of Claims 2 to 7, 9, or 10 in a metering system for the metered delivery of a medium from a cartridge-needle arrangement, whose cartridge (2) is connected to the needle arrangement (1) via at least one hollow channel (3) and has an open cartridge end (4), which is loaded by a pressure medium, which is capable of driving the medium provided inside the cartridge (2) in the direction of the needle arrangement (1) for the discharge by application of pressure,
**characterized in that** the valve unit is introduced along the hollow channel (3), and
an external magnet unit (18) is provided in the form of a permanent magnet or electromagnet unit, which is situated separately from the hollow channel (3) and generates an external magnetic field, which can be caused to interact with the first magnet unit (9) and is capable of deflecting it against the retaining force jointly with the pressure medium.

13. The use according to Claim 11 or 12,
**characterized in that** the pressure medium is implemented in the form of a pressurized fluid line, which is connected to the cartridge (2) implemented as open on one side, and
the fluid guided in the fluid line under the application of pressure acts on the medium stored in the cartridge (2) under the application of pressure,
a fluid bypass line (16) is provided along the fluid line upstream from the connection to the cartridge (2), which is implemented in such a way that a part of the fluid stream passing the fluid line can be diverted via the fluid bypass line (16), and
the fluid bypass line (16) has an open line end, which is situated in the area adjacent to a needle tip assignable to the needle arrangement (1).

14. The use according to one of Claims 11 to 13,
**characterized in that** the unit which varies the pressure application to the pressure medium is implemented in such a way that the pressure force acting through the pressure medium on the first magnet unit (9) is variable or switchable from a force value which is greater than the retaining force to a force value which is less than the retaining force, and vice versa.

15. The use according to Claim 12,
**characterized in that** the external magnet unit (18) is situated spaced apart from the needle arrangement (1), opposite thereto in the needle longitudinal direction, and
the external magnet unit (18) is movable between at least two positions axial to the needle longitudinal direction, a first position in which the first magnetic field, jointly with the work pressure loading the first magnet unit (9) through the pressure medium opposite to the retaining force, holds the first magnet unit (9) in an open position, in which the first magnet unit (9) is spaced apart from the mechanical stop, and a second position, in which the first magnet unit (9) seals the hollow channel (3) fluid-tight.

16. A method for the metered delivery of a medium from a cartridge-needle arrangement, whose cartridge (2) is connected to the needle arrangement (1) via at least one hollow channel (3) and has an open cartridge end (4), which is loaded by a pressure medium, which is capable of driving the medium provided inside the cartridge (2) in the direction of the needle arrangement (1) for the discharge by application of pressure,
**characterized in that** a solenoid valve (7) is provided along the hollow channel (3), on which the medium acts under the application of pressure and the seals the hollow channel (3) fluid-tight against a pressure force loading the medium on the solenoid valve (7) exclusively under the action of a retaining force which can be generated by magnetic force, and
opening of the solenoid valve (7) is performed by controlled elevation of the pressure force above the retaining force and closing of the solenoid valve (7) is performed by controlled reduction of the pressure force below the retaining force.

17. A method for the metered delivery of a medium from a cartridge-needle arrangement, whose cartridge (2) is connected to the needle arrangement (1) via at least one hollow channel (3) and has an open cartridge end (4), which is loaded by a pressure medium, which is capable of driving the medium provided inside the cartridge (2) in the direction of the needle arrangement (1) for the discharge by application of pressure,
**characterized in that** a solenoid valve (7) is provided along the hollow channel (3), on which the medium acts under the application of pressure and the seals the hollow channel (3) fluid-tight against a pressure force loading the medium on the solenoid valve (7) exclusively under the action of a retaining force which can be generated by magnetic force, and opening of the solenoid valve (7) is performed by controlled provision of an external magnetic field, by which a magnetic force which reduces the retaining force is generated, and closing of the solenoid valve (7) is performed by reducing the external magnetic field.

18. The method according to Claim 16 or 17,
**characterized in that** a pressurized fluid is used as the pressure medium, which is connected to the cartridge (2) via a fluid line, and the controlled elevation and reduction of the pressure force is performed by variation of a flow pressure prevailing along the fluid line.

19. The method according to Claim 18,
**characterized in that** the variation of the flow pressure prevailing along the fluid line is performed by diverting a part of the fluid flow through a fluid bypass line, and
a flow pressure resulting along the fluid bypass line is generated by variation of a backup pressure settable in a controlled way at an open end of the fluid bypass line.

## Revendications

1. Unité de vanne destinée à interrompre ou libérer un débit d'un fluide le long d'un canal creux (3), lequel, sollicité en pression, circule le long du canal creux (3),
**caractérisée en ce**
**qu'**au moins une première unité d'aimant (9), montée de façon mobile axialement dans le sens longitudinal par rapport au sens d'écoulement du fluide à travers le canal creux (3), est prévue au moins dans un tronçon le long du canal creux (3) pour générer un premier champ magnétique,
en ce qu'une seconde unité d'aimant (8) est prévue, dont le second champ magnétique est en interaction avec le premier champ magnétique, de telle sorte qu'une force magnétique, attirant axialement les unités d'aimant les unes par rapport aux autres, agit entre la première unité d'aimant (9) et la seconde unité d'aimant (8),
en ce qu'il est prévu le long du canal creux (3) une butée mécanique, contre laquelle la première unité d'aimant (9) peut être poussée avec une force de retenue pouvant être générée par la force d'aimant et occupe alors une position axiale, seule position dans laquelle la première unité d'aimant (9) assure l'étanchéité du canal creux (3) par rapport au fluide, alors que le fluide, sollicité en pression, charge axialement dans le sens contraire au sens d'effet de la force de retenue sur la première unité d'aimant (9),
en ce qu'un élément d'espacement (11), pouvant être contourné et/ou parcouru par le fluide dans le sens d'écoulement, est prévu dans le sens d'écoulement en aval de la seconde unité d'aimant (8), lequel élément espace axialement la seconde unité d'aimant (8) de la première unité d'aimant (9), et
en ce qu'une unité est prévue, avec laquelle une force agissant sur la première unité d'aimant (9) dans le sens contraire à la force de retenue, pouvant être prédéfinie de façon variable, peut être générée et se présente comme une unité faisant varier la sollicitation en pression du fluide.

2. Unité de vanne destinée à interrompre ou libérer un débit d'un fluide le long d'un canal creux (3), lequel, sollicité en pression, circule le long du canal creux,
**caractérisée en ce**
**qu'**au moins une première unité d'aimant (9), montée de façon mobile axialement dans le sens longitudinal par rapport au sens d'écoulement du fluide à travers le canal creux (3), est prévue au moins dans un tronçon le long du canal creux (3) pour générer un premier champ magnétique,
en ce qu'une seconde unité d'aimant (8) est prévue, dont le second champ magnétique est en interaction avec le premier champ magnétique, de telle sorte qu'une force d'aimant, attirant axialement les unités d'aimant les unes par rapport aux autres, agit entre la première unité d'aimant (8) et la seconde unité d'aimant (9),
en ce qu'une butée mécanique est prévue le long du canal creux (3), butée contre laquelle la première unité d'aimant (8) peut être poussée avec une force de retenue pouvant être générée par la force d'aimant et occupe alors une position axiale, seule position dans laquelle la première unité d'aimant (8) étanchéifie le canal creux (3) par rapport au fluide, alors que le fluide, sollicité en pression, charge axialement dans le sens contraire au sens d'effet de la force de retenue sur la première unité d'aimant (8),
en ce qu'un élément d'espacement (11), pouvant être contourné et/ou traversé par le fluide dans le sens d'écoulement, est prévu dans le sens d'écoulement en aval de la seconde unité d'aimant (9), lequel élément espace axialement la seconde unité d'aimant (8) de la première unité d'aimant (9), et
en ce qu'une unité est prévue, avec laquelle une force agissant sur la première unité d'aimant (9) dans le sens contraire à la force de retenue, pouvant être prédéfinie de façon variable, peut être générée et est conçue sous la forme d'une unité d'aimant permanent ou d'une unité d'électroaimant, qui est disposée séparément du canal creux (3) et génère un champ magnétique externe, qui peut être amené en interaction avec la première unité d'aimant (9).

3. Unité de vanne selon la revendication 1 ou 2,
**caractérisée en ce que** la seconde unité d'aimant (8) entoure le canal creux (3) au moins dans un tronçon à la façon d'un anneau ou délimite ce tronçon au moins partiellement indirectement ou directement.

4. Unité de vanne selon l'une des revendications 1 à 3, **caractérisée en ce qu'**un moyen d'étanchéité (13) est prévu dans le sens d'écoulement en aval de l'élément d'espacement (11) et en amont de la première unité d'aimant (9), de telle sorte que le moyen d'étanchéité (13) est comprimé par la première unité d'aimant (9) de façon étanche au fluide contre l'élément d'espacement (11), dans la mesure où la première unité d'aimant (9) se trouve dans la position axiale, seule position dans laquelle la première unité d'aimant (9) étanchéifie le canal creux (3) par rapport au fluide.

5. Unité de vanne selon l'une des revendications 1 à 4,
**caractérisée en ce que** dans la zone axiale du canal creux (3), le long de laquelle la première unité d'aimant (9) est montée de façon axialement mobile, est prévue une section de canal creux, qui est supérieure à une section pouvant être attribuée à la première unité d'aimant (9), de sorte qu'une cavité pouvant être parcourue par le fluide est prévue radialement entre une paroi de canal creux pouvant être attribuée au canal creux (3) et la première unité d'aimant (9).

6. Unité de vanne selon l'une des revendications 1 à 5,
**caractérisée en ce que** le tronçon du canal creux (3), dans lequel la première unité d'aimant (9) et la seconde unité d'aimant (8) sont disposées, est conçu comme unité de construction modulaire et est entouré d'un boîtier (10), qui prévoit deux adaptateurs de branchement pour la liaison étanche au fluide avec la conduite creuse.

7. Unité de vanne selon l'une des revendications 1 à 6, **caractérisée en ce qu'**une des deux unités d'aimant (8, 9) est conçue comme aimant permanent et l'autre unité d'aimant (18) présente du matériau ferromagnétique.

8. Unité de vanne selon la revendication 1,
**caractérisée en ce que** l'unité est conçue comme pompe, qui transporte le fluide de façon variable en pression à travers le canal creux (3).

9. Unité de vanne selon la revendication 2,
**caractérisée en ce que** l'unité d'aimant (18) est montée de façon mobile par rapport à la première unité d'aimant (9) pour générer le champ magnétique externe et peut être transférée au moins dans deux positions, une première position, dans laquelle le champ magnétique externe maintient la première unité d'aimant (9) conjointement avec la pression de travail chargeant sur la première unité d'aimant (9) par l'agent de pression dans le sens contraire à la force de retenue dans une position ouverte, dans laquelle la première unité d'aimant (9) est espacée de la butée mécanique, et une seconde position, dans laquelle la première unité d'aimant étanchéifie le canal creux (3) par rapport au fluide.

10. Unité de vanne selon l'une des revendications 1 à 9,
**caractérisée en ce que** la première unité d'aimant (9) est conçue en forme de boule, et présente un diamètre de boule qui est supérieur à la section du canal creux,
**en ce que** la seconde unité d'aimant (8) entoure par endroits le canal creux (3) ou forme celui-ci, et **en ce que** la première unité d'aimant (9) s'applique directement sur la seconde unité d'aimant (8) et étanchéifie le canal creux (3) par rapport au fluide.

11. Utilisation de l'unité de vanne selon l'une des revendications 1, 3 à 8 ou 10 dans un système de dosage pour l'évacuation dosée d'un fluide d'un agencement à aiguille de cartouche, dont la cartouche (2) est en liaison avec l'agencement à aiguille (1) au moyen d'au moins un canal creux (3) et présente une extrémité de cartouche (4) conçue ouverte, sur laquelle agit un agent de pression, qui est en mesure de faire évacuer par application de pression le fluide prévu à l'intérieur de la cartouche (2) dans le sens de l'agencement à aiguille (1),
**caractérisée en ce que** l'unité de vanne est introduite le long du canal creux (3) et
**en ce qu'**une unité faisant varier l'application de pression de l'agent de pression est prévue, unité par laquelle le fluide est sollicité en pression.

12. Utilisation de l'unité de vanne selon l'une des revendications 2 à 7, 9 ou 10 dans un système de dosage pour l'évacuation dosée d'un fluide d'un agencement à aiguille de cartouche, dont la cartouche (2) est en liaison avec l'agencement à aiguille (1) par au moins un canal creux (3) et présente une extrémité de cartouche (4) conçue ouverte, sur laquelle agit un agent de pression, qui est en mesure de faire évacuer par application de pression le fluide prévu à l'intérieur de la cartouche (2) en direction de l'agencement à aiguille (1),
**caractérisée en ce que** l'unité de vanne est introduite le long du canal creux (3) et
**en ce qu'**une unité d'aimant (18) externe est prévue sous forme d'une unité d'aimant permanent ou d'une unité d'électroaimant, qui est disposée séparément du canal creux (3) et génère un champ magnétique externe, qui peut être amené en interaction avec la première unité d'aimant (9) et est en mesure de dévier celle-ci dans le sens contraire à la force de retenue conjointement avec l'agent de pression.

13. Utilisation selon la revendication 11 ou 12,
**caractérisée en ce que** l'agent de pression est conçu sous forme d'une conduite à fluide sollicitée en pression, qui est raccordée à la cartouche (2) conçue ouverte sur un côté, et
**en ce que** le fluide guidé dans la conduite à fluide agit, sollicité en pression, sur le fluide alimenté dans la cartouche (2),
**en ce qu'**une conduite de dérivation de fluide (16) est prévue le long de la conduite à fluide en amont du raccordement à la cartouche (2), laquelle conduite est conçue de telle sorte qu'une partie du flux de fluide passant dans la conduite à fluide peut être déviée par la conduite de dérivation de fluide (16), et
**en ce que** la conduite de dérivation de fluide (16) dispose d'une extrémité de conduite ouverte, qui est disposée dans la zone à côté d'une extrémité de pointe pouvant être attribuée à l'agencement à aiguille (1).

14. Utilisation selon l'une des revendications 11 à 13,
**caractérisée en ce que** l'unité modifiant l'application de pression de l'agent de pression est conçue de telle sorte que la force de pression agissant par l'agent de pression sur la première unité d'aimant (9) peut être modifiée ou commutée et inversement depuis une valeur de force supérieure à la force de retenue vers une valeur de force inférieure à la force de retenue.

15. Utilisation selon la revendication 12,
**caractérisée en ce que** l'unité d'aimant (18) externe est disposée à distance de l'agencement à aiguille (1), en face de celui-ci dans le sens longitudinal de l'aiguille, et
**en ce que** l'unité d'aimant (18) externe peut être déplacée entre au moins deux positions axiales par rapport au sens longitudinal d'aiguille, une première position, dans laquelle le champ magnétique externe maintient la première unité d'aimant (9) conjointement avec la pression de travail, chargeant sur la première unité d'aimant (9), par l'agent de pression dans le sens contraire à la force de retenue dans une position ouverte, dans laquelle la première unité d'aimant (9) est espacée de la butée mécanique, et une seconde position, dans laquelle la première unité d'aimant (9) étanchéifie le canal creux (3) par rapport au fluide.

16. Procédé pour l'évacuation dosée d'un fluide d'un agencement à aiguille de cartouche, dont la cartouche (2) est en liaison avec l'agencement à aiguille (1) au moyen d'au moins un canal creux (3) et présente une extrémité de cartouche (4) conçue ouverte, sur laquelle agit un agent de pression, lequel agent est en mesure d'expulser par application de pression le fluide prévu à l'intérieur de la cartouche (2) en direction de l'agencement à aiguille,
**caractérisé en ce**
- **qu'**une vanne magnétique (7) est prévue le long du canal creux (3), vanne sur laquelle le fluide agit de façon sollicitée en pression et qui étanchéifie le canal creux (3) par rapport au fluide contre une force de pression agissant par le milieu sur la vanne magnétique (7) exclusivement sous l'effet d'une force de retenue pouvant être générée par de la force magnétique et
- en ce qu'une ouverture de la vanne magnétique (7) s'effectue par une augmentation contrôlée de la force de pression par le biais de la force de retenue et une fermeture de la vanne magnétique (7) par un abaissement contrôlé de la force de pression au-dessous de la force de retenue.

17. Procédé destiné à l'évacuation dosée d'un fluide d'un agencement à aiguille de cartouche, dont la cartouche (2) est en liaison avec l'agencement à aiguille (1) au moyen d'au moins un canal creux (3) et présente une extrémité de cartouche (4) conçue ouverte, sur laquelle agit un agent de pression, qui, par application de pression, est en mesure d'évacuer le fluide prévu à l'intérieur de la cartouche (2) en direction de l'agencement à aiguille (1),
**caractérisé en ce**
- **qu'**une vanne magnétique (7) est prévue le long du canal creux (3), vanne sur laquelle le fluide agit de façon sollicitée en pression et qui étanchéifie le canal creux (3) par rapport au fluide dans le sens contraire à une force de pression agissant par le fluide sur la vanne magnétique (7) uniquement sous l'effet d'une force de retenue pouvant être générée par de la force magnétique et
- en ce qu'une ouverture de la vanne magnétique (7) s'effectue par la prévision contrôlée d'un champ magnétique externe, par lequel une force magnétique réduisant la force de retenue est générée, et une fermeture de la vanne magnétique (7) s'effectue par réduction du champ magnétique externe.

18. Procédé selon la revendication 16 ou 17,
**caractérisé en ce qu'**on utilise comme agent de pression un fluide sollicité en pression, qui est raccordé par une conduite à fluide à la cartouche (2), et **en ce que** l'augmentation et l'abaissement contrôlés de la force de pression sont effectués par variation d'une pression d'écoulement prédominant le long de la conduite à fluide.

19. Procédé selon la revendication 18,
**caractérisé en ce que** la variation de la pression d'écoulement prédominant le long de la conduite à fluide s'effectue par dérivation d'une partie de l'écoulement de fluide par une conduite de dérivation de fluide, et
**en ce qu'**une pression d'écoulement s'établissant le long de la conduite de dérivation de fluide est générée par variation d'une pression de retenue réglable de façon contrôlée sur une extrémité ouverte de la conduite de dérivation de fluide.
